# EUROPEAN PATENT SPECIFICATION

(11) **EP 2 047 584 B1**
(45) Date of publication and mention of the grant of the patent: **25.06.2014**
(21) Application number: 07733450.6
(22) Date of filing: 03.07.2007
(51) Int. Cl.: H02K 5/173, H02K 9/19, F04D 19/04, F04D 25/08, F04D 29/063, F04D 29/58, H02K 9/22, H02K 5/20, H02K 9/08

(54) **MOTOR WITH IMPROVED COOLING**
MOTOR MIT VERBESSERTER KÜHLUNG
MOTEUR À REFROIDISSEMENT AMÉLIORÉ

(30) Priority: 10.07.2006 GB 0613577
(43) Date of publication of application: 15.04.2009
(73) Proprietor: Edwards Limited, Crawley, West Sussex RH10 9LW (GB)
(72) Inventor: WILDER, Anthony John, West Sussex BN43 6PB (GB); PHILIPPE, Laurent Marc, West Sussex BN43 6PB (GB)
(74) Representative: Clark, Charles Robert
(86) International application number: PCT/GB2007/002485
(87) International publication number: WO 2008/007052

(56) References cited:
- EP-A- 1 383 229
- DE-C1- 19 824 202
- DE-C1- 19 921 452
- DE-U1- 7 735 181
- JP-A- 2001 292 554
- US-B1- 6 489 697

## Description

The present invention relates to a motor, and to a vacuum pump comprising a motor having a motor rotor exposed to a sub-atmospheric pressure during use of the pump.

Vacuum processing is commonly used in the manufacture of semiconductor devices and flat panel displays to deposit thin films on to substrates, and in metallurgical processes. Pumping systems used to evacuate relatively large process chambers to the desired pressure generally comprise at least one booster pump connected in series with at least one backing pump.

Vacuum pumps typically have oil-free pumping mechanisms, as any lubricants present in the pumping mechanism could cause contamination of the clean environment in which the vacuum processing is performed. Such "dry" vacuum pumps are commonly single or multi-stage positive displacement pumps employing inter-meshing rotors in the pumping mechanism. The rotors may have the same type of profile in each stage or the profile may change from stage to stage. The backing pumps may have either a similar pumping mechanism to the booster pumps, or a different pumping mechanism.

An asynchronous AC motor typically drives the pumping mechanism of a booster pump. Such motors must have a rating such that the pump is able to supply adequate compression of the pumped gas between the pump inlet and outlet, and such that the pumping speed resulting is sufficient for the duty required.

Early designs of dry vacuum pumps used essentially standard motors with greased bearings, and with shaft seals between the motor.and the pumping mechanism of the vacuum pump. These motors operated at relatively low speeds (less than 60 Hz), and at atmospheric pressure. The greased bearings and shaft seals have been found to be sources of unreliability of the vacuum pumps, and so the trend in pump design has been to eliminate both of these items and to run at higher speeds (of the order of 100 Hz). This has been achieved by integrating the motor into the vacuum system, and thereby avoid the requirement to provide shaft seals, and to lubricate the bearings of the motor using oil from the pump gearbox, and thereby eliminate greased bearings from the motor.

A disadvantage of integrating the motor into the vacuum pumping system is that the motor rotor is now required to operate under vacuum in the case of booster pumps, whereas previously the motor rotor operated at all times at atmospheric pressure. This is a difference which has been found to place severe constraints on the achievable motor rating in view of overheating of the motor during use of the vacuum pump.

Electric motors typically have an efficiency of around 85%. The 15% losses in the motor cause heating of the motor windings, motor stator and the motor rotor. The heat generated in the motor windings and the motor stator is readily conveyed by conduction through the housing of the motor, and is typically removed from the housing by water cooling. The windings may be beneficially potted or encapsulated to improve heat transfer with the motor stator and/or with the housing of the motor. When operating at atmospheric pressure, the heat generated in the motor rotor is mainly conveyed to the housing of the motor by convection, using the air inside the motor as a medium for transferring heat from the motor rotor to the motor housing. Motor rotors may be provided with cooling fins to maximise this effect. However, when operating under vacuum there is little or no air inside the motor housing. Consequently, the main path for dissipating heat from the motor rotor is no longer available, and this severely limits the available cooling for the motor rotor. Whilst some cooling is available through conduction along the motor shaft and through the bearings, and by radiation from the motor rotor, the combination of these cooling mechanisms produces only a relatively small cooling effect.

It is known to cool electric motors by forming a heat conduction path, made by the motor lubricant, between stationary and rotary elements of the motor. Such type of motors are described e.g. in documents EP 1 383 229 A1 and DE 198 24 202 C1.

Fomblin oil is typically used to lubricate the gears and bearings of a vacuum pump. If the motor is integrated into the pump gearbox, or attached to the pump gearbox, and shares the gearbox oil for lubrication of the bearings of the motor, then there is the possibility that this oil can come into contact with the motor rotor. If Fomblin oil is heated to a temperature in excess of 280°C, it decomposes to form highly corrosive hydrogen fluoride. Consequently, an upper limit of 250°C is typically set for the operating temperature of the motor rotor. This can reduce the rating of the motor to around 2 kW when operated under vacuum conditions, in comparison to a rating of around 7.5 kW when operated at atmospheric pressure.

It is an aim of the invention to provide improved cooling of rotary parts of a motor when operated at a sub-atmospheric pressure.

In a first aspect, the present invention provides a motor for a vacuum pump comprising stationary elements and rotary elements rotatable relative to the stationary elements, the stationary elements comprising a housing and a motor stator disposed within the housing, and the rotary elements comprising a shaft supported by bearings, and a motor rotor located on the shaft for rotation relative to the motor stator; and a lubricant supply for supplying a lubricant for lubricating the bearings; wherein the motor is integrable into a vacuum pump, so that, during use of the pump, the housing is exposed to sub-atmospheric pressure; the motor rotor comprises a plurality of radial fins for generating a flow of air within the housing, so that, with air present in the housing, heat is drawn from the radial fins; one of the stationary elements defines with one of the rotary elements an annular channel for receiving lubricant from the lubricant supply to form a heat conduction path for transferring heat by conduction from the rotary elements of the motor into the housing at both atmospheric and sub-atmospheric pressures within the housing.

The heat conduction path thus created between rotary and stationary elements of the motor by the presence of lubricant within the annular channel can improve the heat transfer between a relatively hot rotary element of the motor and a relatively cold stationary element of the motor. This heat path can greatly reduce the temperature of the motor rotor when the motor rotor is operated at a sub-atmospheric pressure (that is, when the environment within the housing is at a sub-atmospheric pressure) and can also contribute to the cooling of the motor rotor when the motor is operated at atmospheric pressure. By providing improved cooling of the motor rotor when operated at a sub-atmospheric pressure, the rating of the motor when operated at a sub-atmospheric pressure can be approximately the same as the rating of the motor when operated at atmospheric pressure. Furthermore, the reduced temperature of the rotary elements of the motor can reduce the temperature gradient across the bearings used to support the shaft for rotation relative to the stationary elements of the motor.

In a first embodiment, the annular channel is defined by the housing and the shaft, with the annular channel extending about, and concentric with, the shaft. Two such annular channels may be provided, with the motor rotor located between these two channels. Each of these channels may be located external of a respective bearing used to support the shaft for rotation relative to the housing, that is, with each bearing being located between the motor rotor and a respective annular channel. Alternatively, each annular channel may be located axially between the motor rotor and a respective bearing. The location of the channels closer to the motor rotor can enhance the cooling effect of the heat conduction paths established between the housing and the shaft.

The lubricant supply may be configured to supply lubricant directly into the or each annular channel, from which the lubricant is conveyed into the bearings with rotation of the shaft. The lubricant that has passed through the bearings may be returned to the pump gearbox, which may provide a lubricant source for the lubricant supply. Means may be provided for draining lubricant from the housing to control the amount of lubricant within the housing, with the drained lubricant also being returned to the gearbox.

In a second embodiment, the annular channel is defined by the motor stator and the motor rotor. The lubricant supply may be arranged to supply lubricant into the housing to partially submerge the motor rotor, and thereby form the lubricant-filled channel from the annular air gap between the motor rotor and the motor stator. In this embodiment, the lubricant supply may be arranged to supply lubricant directly into the housing to fill the annular channel, as this can facilitate the configuration of the lubricant supply. Means may be provided for controlling the amount of lubricant contained within the housing. For example, the inlet of a drain may be located radially between the annular channel and the shaft for draining lubricant from the housing, with the position of the drain inlet relative to the housing determining the maximum depth to which the motor rotor is submerged with lubricant.

In this second embodiment, rotation of the shaft causes the partially submerged motor rotor to throw droplets of lubricant towards the walls of the housing. Positioning of the bearings for supporting the shaft close to the motor rotor can enable the bearings to be lubricated by these droplets of lubricant, thereby avoiding the need to provide two separate lubricant supplies for lubricating the bearings. Therefore, in a second aspect the present invention provides a motor comprising a housing, a motor stator disposed within the housing, a shaft passing through the housing, bearings supporting the shaft for rotation relative to the housing, a motor rotor located on the shaft for rotation relative to the motor stator, and a lubricant supply for supplying a lubricant to the housing, the bearings being positioned to receive lubricant thrown by the motor rotor with rotation of the shaft.

In a modification of the first embodiment, an additional annular channel is defined by the motor stator and the motor rotor. In this modification, the inlet of the draining means of the first embodiment is moved radially towards the shaft, and so may be located in a similar position to the inlet of the drain of the second embodiment, namely radially between the additional annular channel and the shaft. As a result, a volume of lubricant can be allowed to form within the housing so as to partially submerge the motor rotor, and thereby form a lubricant-filled channel from the annular air gap between the motor rotor and the motor stator. The position of the inlet relative to the housing determines the maximum depth to which the motor rotor is submerged with lubricant. This can further enhance the cooling of the motor rotor.

In a third aspect, the present invention provides a vacuum pump comprising a motor as aforementioned, and in which a sub-atmospheric pressure is generated within the housing during use of the pump.

Preferred features of the present invention will now be described with reference to the accompanying drawings, in which:
Figure 1, is a schematic cross-sectional view of a first embodiment of a motor; and
Figure 2 is a schematic cross-sectional view of a second embodiment of a motor.

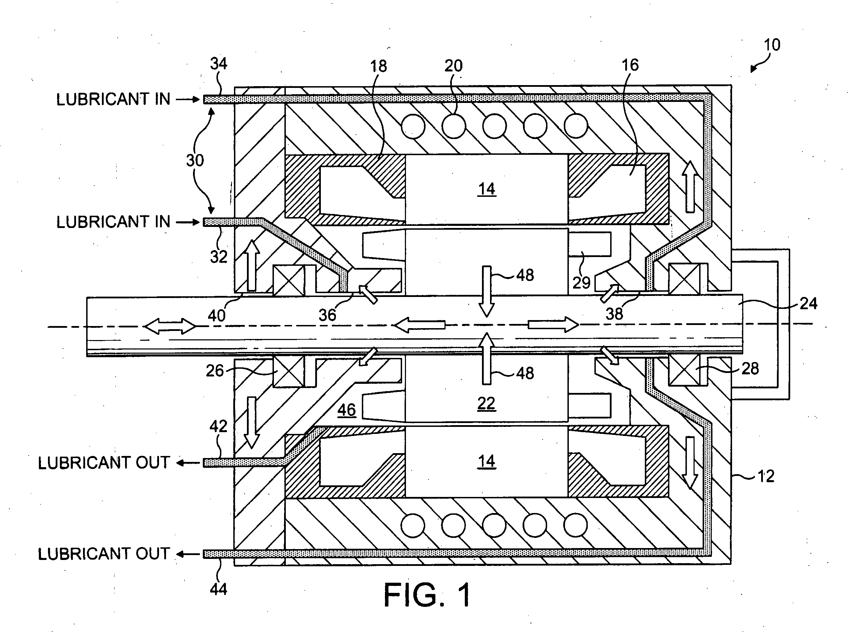

With reference first to Figure 1, a motor 10 for a vacuum pump comprises stationary elements and rotary elements rotatable relative to the stationary elements. The stationary elements comprise a housing 12 and a motor stator 14 located in the housing 12. The motor stator 14 has end windings 16 which are encapsulated in a resin 18. Pipes 20 for conveying a flow of coolant, for example water, about the motor stator 14 are located in thermal contact with the housing 12. As illustrated in Figure 1, the pipes 20 may pass through the housing 12, or alternatively may extend around the outside of the housing 12. The housing 12 is preferably formed from material having a relatively high thermal conductivity, preferably a metallic material such as aluminium.

The rotary elements comprise a motor rotor 22 circumferentially surrounded by the motor stator 14, and a shaft 24 upon which the motor rotor 22 is mounted. The shaft 24 is supported by bearings 26, 28 for rotation relative to the housing 12 to drive the impeller of the vacuum pump. The motor rotor 22 may comprise a plurality of radial fins 29 for generating a flow of air within the housing 12 with rotation of the shaft 24 so that, with air present within the housing 12, heat is drawn from the radial fins 29 by convection due to the forced flow of air circulating within the housing 12.

A lubricant supply system 30 is provided for supplying a lubricant, such as a hydrocarbon oil or Fomblin oil, for lubricating the bearings 26, 28. In this embodiment, the lubricant supply 30 comprises lubricant supply pipes or conduits 32, 34 machined in the housing 12 of the motor 10 each for conveying lubricant from the gearbox of the vacuum pump, or from a dedicated lubricant reservoir, to a respective bearing 26, 28.

The lubricant is supplied by each supply pipe 32, 34 into a respective annular channel 36, 38 defined by the housing 12 and the shaft 24. Each channel 36, 38 extends concentrically about the shaft 24, and in this embodiment is located axially between the motor rotor 22 and a respective bearing 26, 28. The lubricant fills the annular channels 36, 38, and passes, with rotation of the shaft 24, along the shaft 24 and into the bearings 26, 28. With reference to Figure 1, lubricant that has passed through bearing 26 may enter an additional annular channel 40 defined by the housing 12 and the shaft 24, and located external of the bearing 26, that is, with the bearing 26 being located between the motor rotor 22 and the additional annular channel 40. As illustrated, the annular channels 36, 38, 40 may be conveniently defined by the shaft 24 and the bearing flanges of the housing 12. Lubricant return pipes or conduits 42, 44 are also machined in the housing 12 for returning lubricant to the gearbox. Return pipe 42 is arranged to return lubricant from the chamber 46 housing the motor stator 14, and the return pipe 44 is arranged to return lubricant from the annular channel 38. In this embodiment, the return pipe 42 has an inlet located beneath the air gap between the motor stator 14 and the motor rotor 22 so that the chamber 46 is substantially devoid of lubricant during use of the pump.

The motor 10 is preferably integrated into the vacuum pumping system, and so, during use of the pump the chamber 46 of the housing 12 is exposed to a sub-atmospheric pressure. Consequently, the removal of heat from the radial fins 29 by convection may be greatly impaired by the reduced amount of air within the housing 12 during use of the pump. However, the lubricant-filled annular channels 36, 38, 40 located between the shaft 24 and the housing 12 provide heat conduction paths for transferring heat by conduction from the rotary elements of the motor into the housing 12 of the motor 10 at both atmospheric and sub-atmospheric pressures within the housing 12. As indicated by the shaded arrows 48 in Figure 1, heat that is generated in the motor rotor 22 during use of the motor 10 is transferred by conduction into the shaft 24 of the motor 10. The heat passes along the shaft 24 by conduction, and then, also by conduction, is transferred across the lubricant-filled annular channels 36, 38, 40 to the housing 12 of the motor 10. This heat is then transferred by conduction through the walls of the housing 12 to the water flowing within the pipes 20.

The conduction of heat from the shaft 24 to the housing 12 of the motor 10 can enable the temperature of the motor rotor 22 to be reduced to a temperature in the range from 50 to 100°C when the housing 12 of the motor 10 is exposed to a sub-atmospheric pressure whilst achieving a relatively high motor rating, for example greater than 5 kW, and preferably around 7.5 kW. Furthermore, the temperature gradients across the bearings 26, 28 can be maintained at an acceptable level, for example around 50°C, during use of the pump.

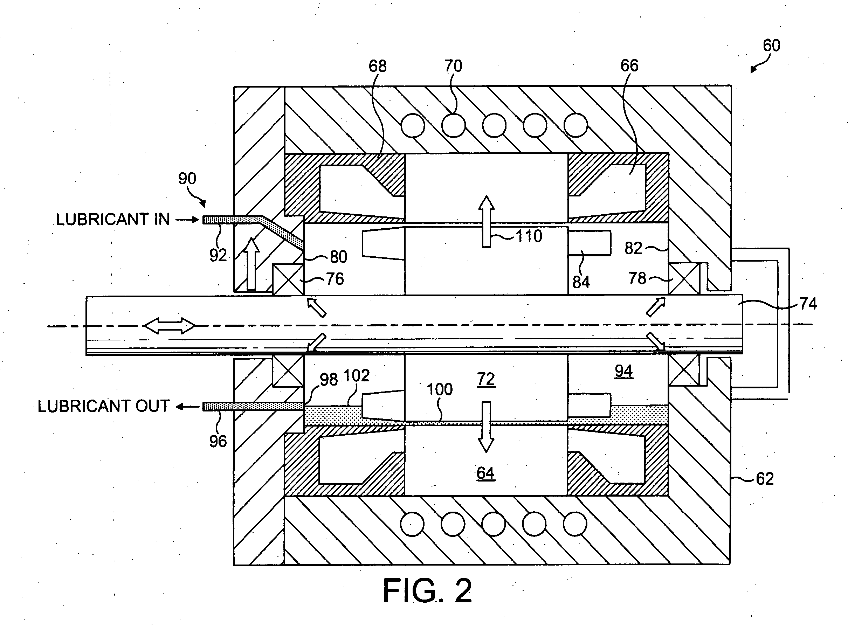

A second embodiment of a motor 60 for a vacuum pump is illustrated in Figure 2. As in the first embodiment, the motor 60 comprises stationary elements and rotary elements rotatable relative to the stationary elements. The stationary elements comprise a housing 62 and a motor stator 64 located in the housing 62. The motor stator 64 has end windings 66 which are encapsulated in a resin 68. Pipes 70 for conveying a flow of coolant, for example water, about the motor stator 64 are located in thermal contact with the housing 62. As illustrated in Figure 2, the pipes 70 may pass through the housing 62, or the pipes 70 may extend around the outside of the housing 62. The housing 62 is preferably formed from material having a relatively high thermal conductivity, preferably a metallic material such as aluminium.

The rotary elements comprise a motor rotor 72 circumferentially surrounded by the motor stator 64, and a shaft 74 upon which the motor rotor 72 is mounted. The shaft 74 is supported by open bearings 76, 78 for rotation relative to the housing 62 to drive the impeller of the vacuum pump. As illustrated in Figure 2, in this embodiment the bearings 76, 78 are each located adjacent to, preferably flush with, a respective inner wall 80, 82 of the housing 62. The motor rotor 72 may comprise a plurality of radial fins 84 for generating a flow of air within the housing 62 with rotation of the shaft 74 so that, with air present within the housing 62, heat is drawn from the radial fins 84 by convection due to the forced flow of air circulating within the housing 62.

A lubricant supply system 90 is provided for supplying a lubricant, such as Fomblin oil, for lubricating the bearings 76, 78. In this embodiment, the lubricant supply 90 comprises a lubricant supply pipe or conduit 92 extending into the housing 62 for conveying lubricant from the gearbox of the vacuum pump, or from a dedicated lubricant reservoir, directly into the chamber 94 of the housing 62. A lubricant return pipe or drain 96 extends from the chamber 94 of the housing 62 to return lubricant to the gearbox. In this embodiment, the drain 96 has an inlet 98 located radially between the shaft 74 and the annular air gap 100 defined between the motor stator 64 and the motor rotor 72 so that, during use of the pump, the motor rotor 74 is partially submerged in a puddle 102 of lubricant located in the chamber 94, and so that the air gap 100 is filled with lubricant.

The motor 60 is preferably integrated into the vacuum pumping system, and so, during use of the pump the chamber 94 of the housing 62 is exposed to a sub-atmospheric pressure. Consequently, the removal of heat from the radial fins 84 by convection may be greatly impaired by the reduced amount of air within the housing 62 during use of the pump. However, the lubricant-filled annular air gap 100 located between the motor stator 64 and the motor rotor 72 provides a heat conduction path for transferring heat by conduction from the rotary elements of the motor into the housing 62 of the motor 60 at both atmospheric and sub-atmospheric pressures within the housing 62. As indicated by the shaded arrows 110 in Figure 2, heat that is generated in the motor rotor 72 during use of the motor 60 is transferred by conduction across the lubricant-filled air gap 100 to the motor stator 64, and is then transferred, also by conduction, to the housing 62 of the motor 60. This heat is then transferred by conduction through the walls of the housing 62 to the water flowing within the pipes 70.

As in the first embodiment, the conduction of heat from the motor rotor 72 to the motor stator 64 can enable the temperature of the motor rotor 72 to be reduced to a temperature in the range from 50 to 100°C when the housing 62 of the motor 60 is exposed to a sub-atmospheric pressure whilst achieving a relatively high motor rating, for example greater than 5 kW, and preferably around 7.5 kW. Furthermore, the temperature gradients across the bearings 76, 78 can be maintained at an acceptable level, for example around 50°C, during use of the pump.

In addition, with rotation of the motor rotor 72 within the housing 62, lubricant present within the housing 62 is thrown outwards from the motor rotor 72. The bearings 76, 78 are positioned to receive lubricant thrown by the motor rotor 72 with rotation of the shaft 74, thereby enabling the bearings 76, 78 to be lubricated by the lubricant thrown from the motor rotor 72. This can enable the lubricant supply 90 to be simplified in comparison to the lubricant supply 30 of the first embodiment; a single lubricant supply pipe 92 is required to supply lubricant directly into the housing 62, as opposed to the two lubricant supply pipes 32, 34 required to supply lubricant to each of the bearings 26, 28 in the first embodiment. Additionally the lubricant return pipes 44 and 42 of the first embodiment, are replaced by the simplified return 96 of the second embodiment. The machining for the lubricant supply pipe 92 may be much simpler than the machining for the two lubricant supply pipes 32, 34. Furthermore, the supply of lubricant to the housing 62 can be unregulated, as the amount of lubricant contained in the housing 62 is determined by the position of the inlet 98 of the drain 96. In comparison, in the first embodiment some control of the rate of supply of lubricant to the annular channels 36, 38 may be required.

In a modification of the first embodiment, the inlet of the lubricant return pipe 42 may be positioned in a similar position to the inlet 98 of the drain 96 of the second embodiment, that is radially, between the shaft 24 and the annular air gap defined between the motor stator 14 and the motor rotor 22. As a result, during use of the pump the motor rotor 22 is partially submerged in a puddle of lubricant located in the chamber 46, and so that the air gap is filled with lubricant. The lubricant-filled annular air gap located between the motor stator 14 and the motor rotor 22 provides an additional heat conduction path for transferring heat by conduction from the rotary elements of the motor into the housing of the motor at both atmospheric and sub-atmospheric pressures within the housing.

## Claims

1. A motor (10, 60) for a vacuum pump comprising stationary elements and rotary elements rotatable relative to the stationary elements, the stationary elements comprising a housing (12) and a motor stator (14) disposed within the housing, and the rotary elements comprising a shaft (24) supported by bearings (26, 28), and a motor rotor (22) located on the shaft for rotation relative to the motor stator; and a lubricant supply (30) for supplying a lubricant for lubricating the bearings; wherein the motor is integrable into a vacuum pump, so that, during use of the pump, the housing is exposed to sub-atmospheric pressure;
**characterised in that**
the motor rotor comprises a plurality of radial fins (16, 84) for generating a flow of air within the housing, so that, with air present in the housing, heat is drawn from the radial fins; and **in that** one of the stationary elements defines with one of the rotary elements an annular channel (36, 38, 100) for receiving lubricant from the lubricant supply to form a heat conduction path for transferring heat by conduction from the rotary elements of the motor into the housing at both atmospheric and sub-atmospheric pressures within the housing.

2. A motor according to Claim 1, wherein the annular channel is defined either by the motor stator and the motor rotor, or by the housing and the shaft.

3. A motor according to Claim 2, wherein when the annular channel is defined by the housing and the shaft, an additional annular channel is defined by the motor rotor and the motor stator.

4. A motor according to Claim 2, wherein the bearings are positioned to receive lubricant thrown by the motor rotor with rotation of the shaft.

5. A motor according to Claim 3, wherein the motor rotor is located between two said annular channels.

6. A motor according to Claim 3, wherein each annular channel is located axially between the motor rotor and a respective bearing.

7. A motor according to any one of Claims 2 to 6, wherein the lubricant supply is configured to supply lubricant either directly into the or each annular channel, or into the housing to partially submerge the motor rotor.

8. A motor according to Claim 7, wherein the additional annular channel is arranged to receive lubricant supplied by the lubricant supply.

9. A motor according to Claim 7 or Claim 8, comprising means for controlling the amount of lubricant contained within the housing.

10. A motor according to Claim 9, wherein the means for controlling the amount of lubricant contained within the housing comprises a drain having an inlet located radially between the annular channel and the shaft for draining lubricant from the housing.

11. A motor according to Claim 3, wherein a means for draining lubricant from the housing has an inlet located radially between the additional annular channel and the shaft.

12. A motor according to any preceding claim, comprising means for cooling the housing.

13. A vacuum pump comprising a motor according to any preceding claim.

14. A vacuum pump according to Claim 13, in which a sub-atmospheric pressure is generated within the housing during use of the pump.

15. A vacuum pump according to Claim 13 or Claim 14, comprising a gearbox, and wherein the lubricant supply is configured to supply lubricant to the motor from the gearbox.

## Patentansprüche

1. Motor (10, 60) für eine Vakuumpumpe, mit stationären Elementen und umlaufenden Elementen, die relativ zu den stationären Elementen drehbar sind, wobei die stationären Elemente ein Gehäuse (12) und einen Motorstator (14) umfassen, der in dem Gehäuse angeordnet ist, und wobei die umlaufenden Elemente eine Welle (24), die von Lagern (26, 28) abgestützt wird, und einen Motorrotor (22) umfassen, der auf der Welle relativ zum Motorstator drehbar angeordnet ist, und mit einer Schmiermittelzufuhr (30) zum Zuführen eines Schmiermittels zum Schmieren der Lager, wobei der Motor in eine Vakuumpumpe integrierbar ist, so dass im Gebrauch der Pumpe das Gehäuse einem unteratmosphärischen Druck ausgesetzt wird, **dadurch gekennzeichnet, dass** der Motorrotor eine Mehrzahl radialer Rippen (16, 84) zum Erzeugen eines Luftstroms innerhalb des Gehäuses aufweist, so dass mit in dem Gehäuse befindlicher Luft Wärme von den radialen Rippen abgezogen wird, und dass eines der stationären Elemente mit einem der umlaufenden Elemente einen ringförmigen Kanal (36, 38, 100) zur Aufnahme von Schmiermittel aus der Schmiermittelzufuhr bildet, um einen Wärmeleitpfad zum Übertragen von Wärme durch Leitung von den umlaufenden Elementen des Motors auf das Gehäuse sowohl bei atmosphärischen als auch unteratmosphärischen Drücken innerhalb des Gehäuses herzustellen.

2. Motor nach Anspruch 1, wobei der ringförmige Kanal entweder durch den Motorstator und den Motorrotor oder durch das Gehäuse und die Welle gebildet wird.

3. Motor nach Anspruch 2, wobei der ringförmige Kanal durch das Gehäuse und die Welle gebildet wird, und ein zusätzlicher ringförmiger Kanal durch den Motorrotor und den Motorstator gebildet wird.

4. Motor nach Anspruch 2, wobei die Lager zur Aufnahme von Schmiermittel positioniert sind, das vom Motorrotor bei Drehung der Welle ausgeworfen wird.

5. Motor nach Anspruch 3, wobei der Motorrotor zwischen den beiden ringförmigen Kanälen angeordnet ist.

6. Motor nach Anspruch 3, wobei jeder ringförmige Kanal axial zwischen dem Motorrotor und einem entsprechenden Lager angeordnet ist.

7. Motor nach einem der Ansprüche 2 bis 6, wobei die Schmiermittelzufuhr dafür konfiguriert ist, Schmiermittel entweder direkt in den oder jeden ringförmigen Kanal oder in das Gehäuse zuzuführen, um den Motorrotor teilweise einzutauchen.

8. Motor nach Anspruch 7, wobei der zusätzliche ringförmige Kanal zur Aufnahme von Schmiermittel angeordnet ist, das von der Schmiermittelzufuhr zugeführt wird.

9. Motor nach Anspruch 7 oder Anspruch 8 mit Mitteln zur Steuerung der Menge von in dem Gehäuse enthaltenem Schmiermittel.

10. Motor nach Anspruch 9, wobei die Mittel zur Steuerung der Menge von im Gehäuse enthaltenem Schmiermittel einen Ablauf umfassen, der einen Einlass hat, der radial zwischen dem ringförmigen Kanal und der Welle angeordnet ist, um Schmiermittel aus dem Gehäuse abzuleiten.

11. Motor nach Anspruch 3, wobei ein Mittel zum Abführen von Schmiermittel aus dem Gehäuse einen Einlass hat, der radial zwischen dem zusätzlichen ringförmigen Kanal und der Welle angeordnet ist.

12. Motor nach irgendeinem vorhergehenden Anspruch mit Mitteln zum Kühlen des Gehäuses.

13. Vakuumpumpe mit einem Motor nach irgendeinem vorhergehenden Anspruch.

14. Vakuumpumpe nach Anspruch 13, in welcher ein unteratmosphärischer Druck innerhalb des Gehäuses während des Gebrauchs der Pumpe erzeugt wird.

15. Vakuumpumpe nach Anspruch 13 oder Anspruch 14 mit einem Getriebe, wobei die Schmiermittelzufuhr dafür konfiguriert ist, Schmiermittel zum Motor aus dem Getriebe zuzuführen.

## Revendications

1. Moteur (10, 60) pour une pompe à vide comprenant des éléments fixes et des éléments rotatifs pouvant tourner par rapport aux éléments fixes, les éléments fixes comprenant un carter (12) et un stator de moteur (14) disposé à l'intérieur du carter et les éléments rotatifs comprenant un arbre (24) porté par des paliers (26, 28) et un rotor de moteur (22) situé sur l'arbre de manière à tourner par rapport au stator de moteur, ainsi qu'une alimentation en lubrifiant (30) pour fournir un lubrifiant destiné à lubrifier les paliers ; dans lequel le moteur peut être intégré à l'intérieur d'une pompe à vide, de telle manière que, pendant l'utilisation de la pompe, le carter est exposé à une pression inférieure à la pression atmosphérique ;
**caractérisé en ce que**
le rotor de moteur comprend une pluralité d'ailettes radiales (16, 84) destinées à générer un écoulement d'air à l'intérieur du carter, de telle manière qu'avec l'air présent dans le carter, de la chaleur est aspirée à partir des ailettes radiales ; et **en ce que** l'un des éléments stationnaires définit avec l'un des éléments rotatifs un canal annulaire (36, 38, 100) destiné à recevoir le lubrifiant en provenance de l'alimentation en lubrifiant afin de former un trajet de conduction thermique pour le transfert de chaleur par conduction à partir des éléments rotatifs du moteur dans le carter, à des pressions à la fois atmosphérique et inférieure à la pression atmosphérique à l'intérieur du carter.

2. Moteur selon la revendication 1, dans lequel le canal annulaire est défini soit par le stator de moteur et le rotor de moteur, soit par le carter et l'arbre.

3. Moteur selon la revendication 2, dans lequel, lorsque le canal annulaire est défini par le carter et l'arbre, un canal annulaire additionnel est défini par le rotor de moteur et le stator de moteur.

4. Moteur selon la revendication 2, dans lequel les paliers sont positionnés pour recevoir du lubrifiant éjecté par le rotor de moteur lors de la rotation de l'arbre.

5. Moteur selon la revendication 3, dans lequel le rotor de moteur est situé entre lesdits deux canaux annulaires.

6. Moteur selon la revendication 3, dans lequel chaque canal annulaire est situé, axialement, entre le rotor de moteur et un palier respectif.

7. Moteur selon l'une quelconque des revendications 2 à 6, dans lequel l'alimentation en lubrifiant est configurée pour fournir du lubrifiant soit directement dans le ou dans chaque canal annulaire, soit à l'intérieur du carter afin d'immerger partiellement le rotor de moteur.

8. Moteur selon la revendication 7, dans lequel le canal annulaire additionnel est agencé pour recevoir du lubrifiant fourni par l'alimentation en lubrifiant.

9. Moteur selon la revendication 7 ou la revendication 8, comprenant des moyens pour commander la quantité de lubrifiant contenue à l'intérieur du carter.

10. Moteur selon la revendication 9, dans lequel les moyens pour commander la quantité de lubrifiant contenue à l'intérieur du carter comprennent un drain présentant une entrée située radialement entre le canal annulaire et l'arbre afin de drainer du lubrifiant hors du carter.

11. Moteur selon la revendication 3, dans lequel des moyens pour drainer du lubrifiant hors du carter comportent une entrée située radialement entre le canal annulaire additionnel et l'arbre.

12. Moteur selon une quelconque revendication précédente, comprenant des moyens pour refroidir le carter.

13. Pompe à vide comprenant un moteur selon une quelconque revendication précédente.

14. Pompe à vide selon la revendication 13, dans laquelle une pression inférieure à la pression atmosphérique est générée à l'intérieur du carter pendant l'utilisation de la pompe.

15. Pompe à vide selon la revendication 13 ou la revendication 14, comprenant une boîte à engrenages, et en ce que l'alimentation en lubrifiant est configurée pour fournir du lubrifiant au moteur à partir de la boîte à engrenages.
